# NEUE EUROPÄISCHE PATENTSCHRIFT

(11) **EP 0 530 538 B2**
(45) Veröffentlichungstag und Bekanntmachung des Hinweises auf die Entscheidung über den Einspruch: **19.03.2008**
(45) Hinweis auf die Patenterteilung: 05.02.1997
(21) Anmeldenummer: 92113527.3
(22) Anmeldetag: 08.08.1992
(51) Int. Cl.: B32B 27/08, B32B 27/34, B65D 65/40

(54) **5-Schichtig coextrudierte biaxial gereckte Schlauchfolie mit mindestens 3 PA-Schichten**
5 layered coextruded biaxially oriented tubular foil with at least 3 polyamide layers
Film tubulaire à cinq couches coextrudées orienté biaxiallement ayant au moins trois couches polyamide

(30) Priorität: 23.08.1991 DE 4128083; 13.09.1991 DE 4130486
(43) Veröffentlichungstag der Anmeldung: 10.03.1993
(73) Patentinhaber: Wolff Walsrode Aktiengesellschaft, D-29655 Walsrode (DE)
(72) Erfinder: Hennig-Cardinal von Widdern, Michael, Dipl.-Ing., W-3030 Walsrode (DE); Weber, Gunter, Dr., W-3032 Fallingbostel (DE)
(74) Vertreter: Polypatent

(56) Entgegenhaltungen:
- EP-A- 0 132 565
- EP-A- 0 225 164
- EP-A- 0 277 839
- DE-A- 4 001 612
- US-A- 4 668 571
- Derwent Publications Ltd., London, GB;

## Beschreibung

Die Erfindung betrifft eine coextrudierte, biaxial gereckte Schlauchfolie zur dauerhaften und faltenfreien Umhüllung von in flüssigem oder pastösem Zustand abgepackten Lebensmitteln wie Brüh-, Kochwurst und Schmelzkäse.

Umhüllungen für Lebensmittel, wie z.B. Koch- oder Brühwurst oder mittels gleichem oder ähnlichem Verfahren abgepackte Füllgüter, müssen ein umfangreiches Anforderungsprofil erfüllen, um der Anwendung in der Praxis gerecht zu werden.

Es sind dies die Forderungen:
**a) Rückstellvermögen**
   Sowohl mit der Abkühlung des zuvor erhitzten Füllgutes als auch mit dem Gewichtsverlust durch Abdampfen von Wasser während der Lagerung geht eine Volumenverringerung der abgepackten Ware einher. Unabhängig von der Volumenverringerung muß die Folie faltenfrei um den Verpackungsinhalt anliegen, um der Ware ein verkaufsförderndes Aussehen zu verleihen.
**b) Festigkeit**
   Das Füllgut wird mit hoher Geschwindigkeit bei einem Fülldruck von bis zu 1,6 bar in die Scluauchfolie gepreßt. Das Folienmaterial soll nach der Druckbeaufschlagung weder partielle Aufweitungen (Beulen) noch eine wesentliche Aufweitung des Kalibers (Durchmesser) aufweisen. Durch die Folienqualität muß gewährleistet sein, daß der hohe Fülldruck vornehmlich zu einer elastischen Verformung der Schlauchfolie führt.
**c) Temperaturbeständigkeit**
   Die Hülle muß einer Temperatur-/Spannungsbelastung derart standhalten, daß sie die Druckbeanspruchung durch das Füllgut auch während der Kochprozedur ohne übermäßige Verformung übersteht.
**d) Barriereeigenschaften**
   Für die unter anderem angestrebte Anwendung der Schlauchfolie als Umhüllung für Brüh- und Kochwurst sind gute Barriereeigenschaften hinsichtlich Sauerstoff- und Wasserdampfpermeation erforderlich.
   Die Sauerstoffbarriere verhindert eine frühzeitige Vergrauung des der Folieninnenseite zugekehrten Brätes.
   Die Wasserdampfbarriere behindert den durch Abdampfen von Wasser aus dem Füllgut induzierten Gewichtsverlust der Verkaufsware, der einerseits den Erlös des Produktes reduziert und andererseits infolge von Volumenverlust zu faltigen unansehnlichen Produkten führen kann.
**e) Bräthaftung**
   Speziell für die Anwendung als Brüh- und Kochwurstumhüllung soll die Schlauchfolie Bräthaftung aufweisen. Unter Bräthaftung versteht der Fachmann das Haftungsvermögen der Hülle am Füllgut. Die Affinität zwischen Umhüllung und Füllgut verhindert den Absatz von Gelee.
**f) Raffbarkeit**
   Vor der industriellen Verarbeitung mittels Füllautomaten wird die Schlauchfolie in die Form einer Raffraupe überführt. Dabei wird der Folienschlauch längs der Schlauchachse gefältelt und anschließend im Verhältnis 30:1 bis 60:1 komprimiert. Die Folie muß der extrem hohen Knickbeanspruchung ohne Beschädigung standhalten.
**g) Lebensmittelrecht**
   Das Produkt darf selbstverständlich nur Materialien enthalten, die nach den tebensmittetrechttichen Gesetzen und Empfehlungen als unbedenklich eingestuft werden.
**h) Ökologie**
   Das Produkt sollte nur aus Materialien bestehen, die sowohl in ihrer Herstellung, Verarbeitung und Anwendung als auch in ihrer Entsorgung aus ökologischer Sicht unbedenklich sind.

Bisher sind keine biaxial gereckten Schlauchfolien aus thermoplastischen Kunststoffen bekannt, die dem umfangreichen Anforderungsprofil in allen Punkten genügen. Die stetig voranschreitende Ablösung von chlorhaltigen Verpakkungsmitteln zwingt die Hersteller und Verarbeiter von Kunststoffdarmhüllen aus VDC/VC-Copolymerisaten alternative Verpackungslösungen anzubieten. Da die gereckte Folie aus VDC/VC-Copolymerisat die an sie gestellten Forderungen nach "Festigkeit", "Sauerstoff-", "Wasserdampfbarriere" und "Bräthaftung" mit nur einem Polymer erfüllen konnte, waren die Folienhersteller bereit, für das VDCNC-Copolymerisat einen relativ hohen Rohstoffpreis zu zahlen. Die Weiterentwicklung der Coextrusionstechnik ermöglicht demgegenüber heute die Kombination von Polymereigenschaften im Coextrusionsverbund unter Einsatz von preisgünstigeren Polymeren.

Seitens der Schlauchfolienhersteller besteht das Interesse, ein den Qualitätsansprüchen der Anwender entsprechendes Produkt möglichst sicher und preiswert herzustellen, um einerseits die Abfallrate weitesgehend zu reduzieren und eine reproduzierbare Folienqualität liefern zu können und andererseits ein hochveredeltes Produkt preiswert anbieten zu können.

Das bekannte Herstellungsverfahren der biaxial gereckten Schlauchfolie gliedert sich in die Verfahrensschritte:
- Plastifizieren der thermoplastischen Polymere
- Überführen der Schmelze in die Schlauchform
- Rasche Abkühlung des schmelzeflüssigen Primärschlauches in den Festkörperzustand, um die Bildung von Kristalliten weitestgehend zu unterdrücken
- Wiedererwärmen des Primärschlauches auf eine für die biaxiale Verstreckung geeignete Temperatur
- Biaxiales Verstrecken des wiedererwärmten Primärschlauches durch Anlegen einer Druckdifferenz zwischen Schlauchinnenvolumen und der Schlauchumgebung und durch die die Längsverstreckung unterstützende Längsabzugskraft
- Thermofixieren der biaxial gereckten Schlauchfolie
- Aufwickeln der Schlauchfolie
- Entsprechend den späteren Erfordernissen unterschiedliche Konfektionierungsschritte (z.B. Schneiden, Bedrukken, Raffen u.a.)

Unter der biaxialen Verstreckung versteht der Fachmann die Quer- und Langsverstreckung des thermoplastischen Extrudates bei Temperaturen zwischen Glasübergangstemperatur und Schmelztemperatur. Die biaxiale Reckung kann beispielsweise mittels einer mit einem Gas- oder Fluiddruckpolster gefüllten Blase erfolgen, die zwischen zwei mit unterschiedlich hohen Umfangsgeschwindigkeiten laufenden Walzenpaaren gas- bzw. fluiddicht eingeschlossen ist. Während das Verhältnis der unterschiedlichen Walzenumfangsgeschwindigkeiten dem Längsreckgrad entspricht, errechnet sich der Querreckgrad aus dem Verhältnis des Schlauchdurchmessers im gereckten Zustand zu dem im ungereckten Zustand. Der Flächenreckgrad resultiert aus dem Produkt des Längsreckgrades multipliziert mit dem Querreckgrad.

Während der Verstreckung richten sich die Moleküle des im Festkörperzustand befindlichen Folienschlauches derart aus, daß der Elastizitätsmodul und die Festigkeit in erheblichem Maß gesteigert werden.

Ausreichende Festigkeit der Schlauchfolie ist dann gegeben, wenn sich die Verpackungshülle beim Füllvorgang und während des Sterilisierens vernehmlich elastisch verformt. Die Verpackungshülle muß ihre zylindrische Form beibehalten und darf sich nicht ausbeulen oder krümmen.

Die biaxiale Verstreckung von Schlauchfolien aus teilkristallinen thermoplastischen Polymeren, wie z.B. Polyamid, Polyvinylidenchlorid erfordert eine rasche Abkühlung des schmelzeflüssigen Primärschlauches, da sonst die sich ausbildende kristalline Überstruktur die nachfolgende biaxiale Verstreckung behindert. Die Behinderung der biaxialen Verstreckung zeigt sich in der Praxis durch eine unruhige Reckblase, d.h. der Reckblasenhals wandert in wechselnder Richtung entlang der Schlauchachse, mit der Folge, daß der Schlauchdurchmesser des Endproduktes ungleichmäßig wird.

Für die Verarbeitung von teilkristallinem, aliphatischem Polyamid (PA) zu biaxial gereckten Folien und deren anschließende Verwendung als Brüh- und Kochwursthülle gibt die Patentliteratur zahlreiche Hinweise. Darin werden sowohl technische Lösungen für den Herstellungsprozeß der biaxial gereckten Schlauchfolien als auch Rezepturentwicklungen für verbesserte anwendungstechnische Eigenschaften veröffentlicht.

Die DE 2 850 181 weist darauf hin, daß durch das Einmischen von olefinischen Copolymeren in das PA eine verbesserte Reckbarkeit erreicht werden kann. Dies zeigt sich nach Angaben der Patentinhaberin darin, daß sich eine optisch eindeutig feststellbare Vergleichmäßigung der Reckblase einstellt und zum anderen eine erhebliche Herabsetzung der erforderlichen Reckkräfte beobachtet wird.

Durch das Einmischen von olefinischen (Co-)Polymeren oder anderen Polymeren, die eine geringere Wasserdampfpermeation als aliphatische Polyamide aufweisen, kann die Wasserdampfbarriere von Folien mit einer PA-Matrix deutlich verbessert werden; im Vergleich zu Hüllen aus PVDC-Copolymerisaten ist die Wasserdampfbarriere jedoch als unzureichend zu beurteilen und damit verbesserungswürdig. Bei der Verarbeitung von Polymerblends treten häufig Schwierigkeiten hinsichtlich einer konstanten Produktqualität auf, da die Verteilung der Blendkomponenten in der Matrix wesentlichen Einfluß auf die Verstreckfähigkeit und die Barriereeigenschaften hat. Aufgrund der Tatsache, daß die Qualität der Verteilung von sehr vielen Parametern der Verarbeitung abhängt (z.B. Viskositäten der Blendpartner, Verarbeitungstemperaturen, Verstreckraten, Schneckengeometrie, usw.), ist die Produktion einer reproduzierbaren Produktqualität äußerst schwierig.

Die mittels Anwendung der Blendtechnik erreichbare Verbesserung der Wasserdampfbarriere von einlagigen PA-Folienschläuchen resultiert aus der flächenförmigen Einlagerung der Blendkomponenten in der PA-Matrix. Die Größe der eingelagerten Flächen wird insbesondere durch den Grad der biaxialen Verstreckung der Folie beeinflußt.

Die flächigen Einlagerungen bilden allerdings keine geschlossene Folienschicht und können dementsprechend nicht in dem Maße die Wasserdampfpermeation reduzieren, wie dies bei Anwendung der Coextrusionstechnik möglich ist. Daraus resultiert, daß durch den Einsatz der Coextrusionstechnik bei gleichem Materialeinsatz eine deutlich verbesserte Wasserdampfbarriere erreicht wird. Das birgt ökonomische und ökologische Vorteile in sich.

Ähnliche Vorgehensweisen werden in den Dokumenten EP 0 216 094 und DE 3 801 344 beschrieben.

Durch die Beimischung von Ethylenvinylalkoholcopolymeren (EVOH) zum PA erreicht man gemäß EP 0 216 094 eine verbesserte Sauerstoffbarriere bei gleichzeitig hoher Durchlässigkeit von Rauch-Geschmacksträgern. Neben der bereits erwähnten Schwierigkeit, eine reproduzierbare Produktqualität herzustellen, führt die ungenügende Temperaturstabilität von EVOH während der Vermischung mit Polyamiden, die bei hoher Temperatur verarbeitet werden, zu einem unerwünschten Abbau des EVOH.

In der DE-OS 3 801 344 wird die biaxial gereckte Schlauchfolie aus einem ternären Blend beschrieben. Während der Hauptgewichtsanteil der Folie aus aliphatischem PA besteht, werden weitere Anteile aus PolyterepMhalsäureester und aromatischem PA zugemischt. Ziel dieser Blendstruktur ist nach Angaben des Anmelders eine homogene Farbpigmentverteilung in der Folie, die durch Farbmasterbatchzubereitung mit dem aromatischen PA und anschließender Zumischung erreicht werden kann.

Wie alle zuvor aufgeführten einschichtigen Folien auf der Basis von aliphatischen Polyamiden erfüllt auch diese Folienstruktur weder die Anforderungen der Produzenten nach sicherer Reproduzierbarkeit noch den Anforderungen der Verarbeiter nach hoher Barrierewirkung gegenüber Wasserdampf- und Sauerstoffpermeation.

Die seitens der Anwender geforderte Qualität der Schlauchfolie läßt sich unter ökonomischen und ökologischen Gesichtspunkten nur durch coextrudierte gereckte Schlauchfolien erfüllen.

In der japanischen Anmeldung J 1 014 032 wird eine biaxial gereckte coextrudierte Schlauchfolie für die Anwendung Brüh- und Kochwurstumhüllung aus 3 Schichten beschrieben, wobei die äußere dem Füllgut abgewandte Lage aus einem aliphatischen PA und die innere Lage aus einem Ethylen-Acrylsäure-Copolymeren besteht. Die zwischen der äußeren und inneren Lage angeordnete mittlere Schicht aus PP-bzw. PE-Copolymerem dient als Haftvermittler. Die innere Polymerschicht aus Ethylen-Acrylsäure-Copolymeren übernimmt hierbei die Funktion der Bräthaftung. Gemäß einer nachfolgenden Anmeldung, GB 2 205 273, wird die Bräthaftung der innenliegenden LLDPE-Schicht durch eine aufwendige, auf die Innenseite des Folienschlauches wirkende Korona-Vorbehandlung, verbessert.

Aufgabe der Erfindung war es dem Anwender eine ökologisch verträgliche, biaxial verstreckte Schlauchfolie mit verbesserter Barrierewirkung und verbesserten anwendungstechnischen Eigenschaften zur Verfügung zu stellen.

Gegenstand der Erfindung ist eine mindestens fünfschichtige coextrudierte biaxial gereckte Schlauchfolie zur Umhüllung von in flüssigem oder pastösem Zustand abgepackten Lebensmitteln, die im befüllten Zustand aufgrund ihrer Barrierewirkung gegen Wasserdampf und Sauerstoff das Füllgut während einer längeren Lagerzeit dauerhaft faltenfrei und ohne sichtbare Sauerstoffeinwirkung umhüllt, deren innere, dem Füllgut zugekehrte Lage, Bräthaftung aufweist, dadurch gekennzeichnet, daß diese aus mindestens 3 PA-Schichten-aufgebaut ist, die die Kern-, die innere und die äußere Schicht bilden.

Die hohe Sauerstoffbarriere der erfindungsgemäßen coextrudierten Schlauchfolie resultiert aus der mehrschichtigen Anordnung der einzelnen PA-Lagen. Dieses Phänomen kann in einem einfachen Versuch nachgestellt werden, bei dem z.B. eine 60 µm starke, einschichtige PA6-Folie mit einer dreischichtigen 60 µm starken Folie (3 x 20 µm) hinsichtlich O₂-Barriere verglichen wird. Die Erklärung für dieses Phänomen liegt wahrscheinlich im Zusammenspiel von Grenzflächen und der sich ausbildenden molekularen Überstruktur als Folge der Herstellungstechnik mit der biaxialen Verstreckung und dem anschließenden Temperprozeß.

Sauerstoffpenetration bewirkt an der für den Verbraucher sichtbaren Oberfläche der Brüh- bzw. Kochwurst Brätvergrauung. Fortgeschrittene Brätvergrauung verleiht der Ware ein verkaufshemmendes Aussehen, was insbesondere dann zum Tragen kommt, wenn Waren unterschiedlichen Herstellungsdatums in der Ladentheke nahe beieinander liegen.

In einer bevorzugten Ausführungsform werden aliphatische Amide, wie Polyamid-6 oder Copolyamide mit einem überwiegenden Anteil an Coprolactam, verwendet. Diese Polyamide können alleine oder als Polymermischung untereinander oder als Polymermischung mit anderen Polymeren, wie z.B. aromatischen Polyamiden PE (-Copolymeren), PP (-Copolymeren), Polyester, usw., mit überwiegendem PA-Anteil verarbeitet werden.

Es ist leicht möglich, die Sauerstoffbarriere dieses PA-Verbundes weiter zu verbessern, indem
1. eine bzw zwei der drei PA-Lagen aus teilaromatischem PA bestehen
2. zwischen den drei PA-Lagen eine oder zwei EVOH-Schichten eingefügt werden.

In einer bevorzugten Ausführungsform wird zwischen die PA-Lagen mindestens eine, die Wasserdampfpermeation hemmende olefinische Schicht, eingefügt. Diese Schicht weist haftvermittelnde Wirkung zum PA auf und besteht aus Copolymeren auf Basis von Ethylen oder Propylen mit funktionellen Gruppen. In einer besonders bevorzugten Ausführungsform wird diese Schicht zwischen der inneren und der Kern-Schicht eingefügt. Bei sehr hohen Ansprüchen hinsichtlich WD-Barriere kann diese Art olefinischer Schicht zusätzlich auch zwischen der äußeren und der Kern-Schicht eingefügt werden.

Durch das Einfügen der olefinischen Polymerschichten werden zudem die äußeren PA-Schichten vor dem Eindringen von Brätsaft geschützt. Dies hat eine weitere Verbesserung der Sauerstoffbarriere zur Folge.

In der Praxis werden Schlauchhüllen vor der Verarbeitung mittels schnellaufender Füllautomaten gewässert. Ziel dieses Verfahrensschrittes ist neben der Oberflächenbenetzung der schlauchförmigen Hülle die Verbesserung der Flexibilität durch Wasseraufnahme. Auch Schlauchfolien aus thermoplastischen Materialien erfahren diese Behandlung, u.a. um wasseraufnahmefahige Polymere durch Wassereinlagerung "weich" zu machen. Bei aliphatischen Polyamiden kann in Folge von Wasseraufnahme der Bereich der Glasübergangstemperatur auf unter 0°C gesenkt werden.

Bei der erfindungsgemäßen Schlauchfolie sind 2 der 3 PA-Schichten als äußere bzw. innere Lage angeordnet, um eine ungestörte Wasseraufnahme während des Wässerungsprozesses zu gewährleisten.

In einer besonders bevorzugten Ausführungsform wird die innenliegende PA-Kernschicht als Copolyamid-Schicht mit überwiegendem Caprolactam-Anteil oder als teilaromatische PA-Schicht ausgeführt, da bei diesen Polymeren der Einfluß der Wasseraufnahme nur untergeordnete Bedeutung hat. Das kommt insbesondere dann zum Tragen, wenn die PA-Kernschicht durch olefinische Wasserdampfbarrieren eingekapselt ist.

### Beispiele

Die im nachfolgenden aufgeführten Beispiele wurden an einer 5-Schicht-Schlauchcoextrusionslinie realisiert. Die Plastifizierung und Homogenisierung der eingesetzten Polymere erfolgte mit Hilfe von 5 separaten Extrudern.

In den Fällen, bei denen der Folienverbund durch weniger als 5 Polymerschichten (mit wechselnder Polymerzusammensetzung) gebildet wurde, sind identische Polymertypen nebeneinandergelegt worden.

### Beispiel 1

Das Polymer (A1) wird durch 5 Extruder plastifiziert und homogenisiert und mittels einer 5-Schicht-Coextrusionsdüse in die Schlauchform überführt. Der Folienschlauch besitzt demnach die Struktur: A1/A1/A1/A1/A1
- Polymer A1 ist ein Polyamid 6 (B40 F von der Bayer AG).
   Das aus der Düse austretende schlauchförmige Coextrudat wird sowohl von außen als auch von innen mit auf 10°C temperiertem Wasser abgeschreckt. Das Kühlwasser im Schlauchinneren wird durch ein dicht abschließendes Walzenpaar abgequetscht. Dieses Walzenpaar übernimmt gleichzeitig die Aufgabe des Schmelzeabzuges aus der Düse. Das vollständige Entfernen der Restfeuchte von der äußeren Oberfläche des Primärschlauches erfolgt mittels einer mechanischen Abstreifvorrichtung und eines Luftstrahls. Der so erhaltene unverstreckte Primärschlauch hat einen Durchmesser von 20 mm und eine Gesamtschichtstärke von 500 µm.
   Nach seiner Wiedererwärmung auf 90°C wird der Primärschlauch durch Einschluß einer Luftblase zwischen zwei Walzenpaaren mit unterschiedlichen Umfangsgeschwindigkeiten um das 3,0fache quer und das 3,0fache längs gereckt.
   Wiederum zwischen zwei gasdicht abschließenden Walzenpaaren durchläuft der biaxial gereckte Folienschlauch für 15 Sekunden eine auf 160°C temperierte Wärmebehandlungszone (Thermofixierung), wobei ein von innen wirkendes Gasdruckpolster weitestgehend den Schrumpf verhindert. Die so erhaltene biaxial gereckte, wärmebehandelte Schlauchfolie besitzt eins Gesamtschichtstärke von 56 µm.
   Bei einer Liegebreite von 85 mm beträgt die Uegebreitenschwankung des flachgelegten Folienschlauches über einen beobachteten Zeitraum von 30 Minuten weniger als 1,0 mm.
   Während der anschließenden anwendungstechnischen Prüfung wird der Folienschlauch nach 10minütiger Lagerung in auf 20°C temperiertem Wasser mit Leberwurstbrät gefüllt, 45 Minuten bei 75°C gebrüht, mit kaltem Wasser abgeduscht und im Kühlhaus vollständig abgekühlt. Die Schlauchfolie umhüllt das Wurstbrät glatt und prall und weist gute Bräthaftungseigenschaften auf.
   Die Gewichtsverluste durch Abdampfen von Wasser über einen Lagerungszeitraum von 20 Tagen betragen 1,2 Gew.-%; das Leberwurstbrät erfährt an seiner der Folie zugekehrten Seite keine sichtbare Brätvergrauung.
   Die Folie läßt sich sehr gut wendelförmig vom Füllgut abschälen.

### Beispiel 2

In Beispiel 2 wird die Kernschicht A1 aus Beispiel 1 durch ein teilaromatisches PA und die innere Schicht A1 durch ein Copolyamid 6.66 ersetzt. Daraus resultiert der Aufbau (von außen nach innen): A1/A1/A2/A3/A3
- Polymer A1 ist ein aliphatisches Polyamid 6 (B40 F von der Bayer AG),
- Polymer A2 ist ein teilaromatisches PA (Nyref N-MXD6 von Solvay),
- Polymer A3 ist ein aliphatisches Copolyamid 6.66 (Ultramid C 35 von der BASF AG).

Bei gleichem Verfährensablauf wie in Beispiel 1 wird ein Primärschlauch mit folgender Schichtdickenverteilung erzeugt:
A1 = 135 µm, A1 = 65 µm, A2 = 90 µm, A3 = 65 µm, A3 = 135 µm.

Die biaxial gereckte, warmebehandelte Schlauchfolie besitzt eine Gesamtschichtstärke von 57 µm. Bei einer Liegebreite von 85 mm beträgt die Liegebreitenschwankung des flachgelegten Folienschlauches über einen beobachteten Zeitraum von 30 Minuten weniger als 1,3 mm.

Die Gewichtsverluste durch Abdampfen von Wasser über einen Lagerungszeitraum von 20 Tagen betragen 1,0 Gew.-%; das Leberwurstbrät erfährt an seiner der Folie zugekehrten Seite keine sichtbare Brätvergrauung.

Ansonsten erzielt diese Folienstruktur bei der anwendungstechnischen Prüfung gleich gute Ergebnisse wie die aus Beispiel 1.

Die Zusammenfassung der wichtigsten anwendungstechnischen Ergebnisse ist in Tabelle 1 dargestellt.

### Beispiel 3

Ausgehend von Beispiel 1 wird zwischen den einzelnen PA-Schichten ein olefinisches Copolymer eingefügt, dabei entsteht folgende Folienstruktur:
A1/B1/A1/B1/A1
- Polymer B1 ist ein lonomerharz auf Ethylen-Basis (Surlyn 1650 von DuPont)

Bei gleichem Verfahrensablauf wie in Beispiel 1 wird ein Primärschlauch mit folgender Schichtdickenverteilung erzeugt:
A1 = 135 µm, B1 = 65 µm, A1 = 90 µm, B1 = 65 µm, A1 = 135 µm.

Die biaxial gereckte, wärmebehandelte Schlauchfolie besitzt eine Gesamtschichtstärke von 54 µm. Die Liegebreitenschwankung des flachgelegten Folienschlauches ist über einen beobachteten Zeitraum von 30 Minuten kleiner als 1,4 mm.

Bei der anschließenden vergleichenden anwendungstechnischen Prüfung stellt sich erwartungsgemäß ein geringerer Gewichtsverlust (0,3 Gew.-%) durch Abdampfen von Wasser während der 20tägigen Lagerung ein.

Ansonsten erzielt diese Folienstruktur hinsichtlich Füllverhalten und Faltenfreiheit gleich gute Ergebnisse wie die aus den Beispielen 1 und 2.

### Beispiel 4

Ausgehend von Beispiel 2 wird zwischen den unterschiedlichen PA-Schichten ein olefinisches Copolymer eingefügt. Daraus resultiert folgende Folienstruktur (von außen nach innen):
A1/B1/A2/B1/A3

Bei gleichem Verfahrensablauf wie in den vorgenannten Beispielen wird ein Primärschlauch mit folgender Schichtdickenverteilung erzeugt:
A1 = 135 µm, B1 = 67 µm, A2 = 90 µm, B1 = 67 µm, A3 = 135 µm.

Der biaxial gereckte, wärmebehandelte Folienschlauch besitzt eine GesamtschicMstärke von 55 µm. Die Vegebreitenschwankung des flachgelegten Folienschlauches ist über einen beobachteten Zeitraum von 30 Minuten kleiner als 1,5 mm.

Bei der anschließenden vergleichenden anwendungstechnischen Prüfung stellt sich erwartungsgemäß ein geringerer Gewichtsverlust (0,2 Gew.-%) durch Abdampfen von Wasser während der 20tägigen Lagerung ein.

Die Zusammenfassung der anwendungstechnischen Ergebnisse ist in Tabelle 1 dargestellt.

### Vergleichsbeispiel

In Anlehnung an Beispiel 1 wurde ein einschichtiger, biaxial gereckter Folienschlauch aus PA 6 (A1) hergestellt. Bei der anwendungstechnischen Beurteilung fiel insbesondere die geringere Barrierewirkung dieses Folienmusters auf.

**Tabelle zu den Beispielen aus Patententwurf Nr. I**

| | | Beurteilung der Folie durch anwendungstechnischen Versuch | | | |
|---|---|---|---|---|---|
| Beispiel Nr. | Folienstruktur (von außen nach innen) | "Sitz" der Folie nach dem Füllvorgang | nach 20 Tagen "Sitz" der Folie | Lagerung im Gewichtsv. (Gew.-%) | Kühlhaus Brätvergr. |
| 1 | PA6/PA6/PA6/PA6/PA6 | glatt u. prall | gering faltig | 1,2 | keine |
| 2 | PA6.66/PA6.66/arom.PA/PA6/PA6 | glatt u. prall | glatt | 1,0 | keine |
| 3 | PA,6/Ionomer/PA6/Ionomer/PA6 | glatt u. prall | glatt u. prall | 0,3 | keine |
| 4 | PA6.66/Ionomer/arom. PA6/ Ionomer/PA6 | glatt u. prall | glatt u. prall | 0,2 | keine |
| V 1 | | glatt u. prall | faltig | 1,4 | sichtbar |

## Patentansprüche

1. Mindestens fünfschichtig coextrudierte biaxial gereckte Schlauchfolie zur Umhüllung von in flüssigem oder pastösem Zustand abgepackten Lebensmitteln, die während und/oder nach der Abfüllung eine Wärmebehandlung erfahren, **dadurch gekennzeichnet, daß** diese aus mindestens 3 PA enthaltenden Schichten aufgebaut ist, die die Kern-, die innere und die äußere Schicht bilden, und daß zwischen diesen PA-Schichten olefinische (Co)-Polymerschichten angeordnet sind.

2. Schlauchfolie nach Anspruch 1, **dadurch gekennzeichnet, daß** deren drei PA-Schichten aus aliphatischem Polyamid wie PA 6, PA 11, PA 12, PA 66, PA 6.66, PA 6.8, PA 6.9, PA 6.10, PA 6.11, PA 6.12, einem Copolymer aus den darin enthaltenen Monomereinheiten oder einer Mischung der genannten aliphatischen Polyamide bestehen.

3. Schlauchfolie nach den Ansprüchen 1 bis 2, **dadurch gekennzeichnet, daß** deren drei PA-Schichten 70 bis 95 Gew.-% eines aliphatischen Polyamids und/oder Copolyamids und/oder Mischungen aus denselben und wenigstens ein
- (teil-)arornatisches PA und/oder
- olefinisches (Co-)Polymer (EVA, EVOH, lonomerharz, säuremodifizierte Olefin-(CO-)Polymere) und/oder
- (CO-)Polyester
in Mengen von mindestens 5 bis höchstens 30 Gew.-%, bezogen auf das Gesamtgewicht des Polymergemisches, enthalten.

4. Schlauchfolie nach den Ansprüchen 1 bis 3, **dadurch gekennzeichnet, daß** die mittlere und/oder innere der drei PA-Schlauchfolienschichten aus einem teilaromatischen PA besteht.

5. Schlauchfolie nach Anspruch 4, **dadurch gekennzeichnet daß** das teilaromatische PA durch Polykondensation von Meta-Xylylendiamin und Adipinsäure hergestellt wird.

6. Schlauchfolie nach einem der vorhergehenden Ansprüche, **dadurch gekennzeichnet, daß** die olefinischen Schichten EVOH oder typische Haftvermittler auf Basis von Ethylen und/oder Propylen enthalten.

7. Schlauchfolie nach wenigstens einem der vorhergehenden Ansprüche, **dadurch gekennzeichnet, daß** die Summe aller Schichtendicken zwischen 35 und 70 µm liegt.

8. Schlauchfolie nach wenigstens einem der vorhergehenden Ansprüche, **dadurch gekennzeichnet daß** diese eine scrap-Schicht, bestehend aus dem Gemisch aller extrudierten Einzelschichten aufweist.

## Claims

1. At least five-layer co-extruded, biaxially stretched tubular film for the wrapping of foodstuff packed in the liquid or pasty state which during and/or after filling undergo a heat treatment, **characterised in that** said tubular film is constructed from at least 3 layers containing PA which form the core layer, the inner layer and the outer layer, and **in that** olefinic (co)polymer layers are arranged between these PA layers.

2. Tubular film according to Claim 1, **characterised in that** its three PA layers consist of aliphatic polyamide such as PA 6, PA 11, PA 12, PA 66, PA 6.66, PA 6.8, PA 6.9, PA 6.10, PA 6.11, PA 6.12, a copolymer consisting of the monomer units contained therein or a mixture of the named aliphatic polyamides.

3. Tubular film according to Claims 1 to 2, **characterised in that** its three PA layers contain 70 to 95 wt-% of an aliphatic polyamide and/or copolyamide and/or mixtures of the same and at least one
- (partially) aromatic PA and/or
- olefinic (co)polymer (EVA, EVOH, ionomer resin, acid-modified olefin (co)polymers) and/or
- (co)polyester
in quantities from at least 5 to at most 30 wt-%, relative to the total weight of the polymer mixture.

4. Tubular film according to Claims 1 to 3, **characterised in that** the middle and/or inner layer of the three PA tubular-film layers consists of a partially aromatic PA.

5. Tubular film according to Claim 4, **characterised in that** the partially aromatic PA is produced by polycondensation of meta-xylylene diamine and adipic acid.

6. Tubular film according to one of the preceding claims, **characterised in that** the olefinic layers contain EVOH or typical adhesion promoters based on ethylene and/or propylene.

7. Tubular film according to at least one of the preceding claims, **characterised in that** the sum of all layer thicknesses amounts to between 35 and 70 µm.

8. Tubular film according to at least one of the preceding claims, **characterised in that** said tubular film has a scrap layer consisting of the mixture of all extruded individual layers.

## Revendications

1. Feuille en gaine ayant subi un étirage biaxial comportant au moins cinq couches coextrudées, pour envelopper des denrées alimentaires conditionnées à l'état fluide ou pâteux, qui, pendant et/ou après le remplissage, sont traitées à la chaleur, **caractérisée en ce que** ce film comprend une structure à au moins trois couches contenant du PA, qui forment les couches centrale, interne et externe, et **en ce que** des couches de (co)polymère oléfinique sont insérées entre cec couches de PA.

2. Feuille en gaine selon la revendication 1, **caractérisée en ce que** ses trois couches de PA sont constituées de polyamide aliphatique (PA 6, PA 11, PA 12, PA 66, PA 6.66, PA 6.8, PA 6.9, PA 6.10, PA 6.11, PA 6.12), d'un copolymère composé des unités monomères qui y sont présentes, ou d'un mélange des polyamides aliphatiques cités.

3. Feuille en gaine selon les revendications 1 à 2, **caractérisée en ce que** ses trois couches de PA contiennent 70 à 95% en poids d'un polyamide aliphatique et/ou d'un copolyamide et/ou de mélanges de ceux-ci et au moins
- un PA (partiellement) aromatique et/ou
- un (co)polymère oléfinique (EVA, EVOH, résine ionique, (co-)polymère oléfinique modifié par de l'acide) et/ou
- un (co)polyester
en mélange d'au moins 5 à 30% maximum en poids, rapporté au poids total du mélange de polymères.

4. Feuille en gaine selon les revendications 1 à 3, **caractérisée en ce que** la couche centrale et/ou la couche interne des trois couches de PA de la feuille en gaine sont constituées de PA partiellement aromatique.

5. Feuille en gaine selon les revendication 4, **caractérisée en ce que** le PA partiellement aromatique a été obtenu par polycondensation de métaxylylènediamine et d'acide adipique.

6. Feuille en gaine selon l'une des revendications précédentes, **caractérisée en ce que** les couches oléfiniques contiennent de l'EVOH ou un agent adhésif typique à base d'éthylène et/ou de propylène.

7. Feuille en gaine selon au moins l'une des revendications précédentes, **caractérisée en ce que** la somme des épaisseurs de couche est comprise entre 35 et 70 µm.

8. Feuille en gaine selon au moins l'une des revendications précédentes, **caractérisée en ce que** celle-ci présente une couche pour le rebut constituée du mélange de toutes les diverses couches extrudées.
